# FASCICULE DE BREVET EUROPEEN

(11) **EP 4 016 055 B1**
(45) Date de publication et mention de la délivrance du brevet: **27.09.2023**
(21) Numéro de dépôt: 21215674.9
(22) Date de dépôt: 17.12.2021
(51) Int. Cl.: G01N 21/552, G01N 21/45

(54) **COMPOSANT OPTIQUE POUR UN DISPOSITIF INTERFÉROMETRIQUE D'IMAGERIE ATR**
OPTISCHE KOMPONENTE FÜR EINE INTERFEROMETRISCHE ATR-BILDGEBUNGSVORRICHTUNG
OPTICAL COMPONENT FOR AN ATR IMAGING INTERFEROMETRIC DEVICE

(30) Priorité: 21.12.2020 FR 2013817
(43) Date de publication de la demande: 22.06.2022
(73) Titulaire: COMMISSARIAT À L'ÉNERGIE ATOMIQUE ET AUX ÉNERGIES ALTERNATIVES, 75015 Paris (FR)
(72) Inventeur: MONPEURT, Cyrielle, 38054 GRENOBLE CEDEX 09 (FR); JOBERT, Gabriel, 38054 GRENOBLE CEDEX 09 (FR)
(74) Mandataire: Brevalex

(56) Documents cités:
- GB-A- 2 409 034
- YASSINE HADJAR ET AL: "Compact interferometer transducer based on surface plasmon phase resonance", JOURNAL OF THE OPTICAL SOCIETY OF AMERICA A, vol. 32, no. 5, 13 avril 2015 (2015-04-13) , page 771, XP055327044, ISSN: 1084-7529, DOI: 10.1364/JOSAA.32.000771
- MELNIK EVA ET AL: "Surface Modification of Integrated Optical MZI Sensor Arrays Using Inkjet Printing Technology", PROCEDIA ENGINEERING, ELSEVIER BV, NL, vol. 168, 4 janvier 2017 (2017-01-04), pages 337-340, XP029874660, ISSN: 1877-7058, DOI: 10.1016/J.PROENG.2016.11.113
- PETER KOZMA ET AL: "Integrated planar optical waveguide interferometer biosensors: A comparative review", BIOSENSORS AND BIOELECTRONICS, vol. 58, 28 février 2014 (2014-02-28), pages 287-307, XP055181178, ISSN: 0956-5663, DOI: 10.1016/j.bios.2014.02.049

## Description

### DOMAINE TECHNIQUE

L'invention se rapporte au domaine de l'imagerie multi-spectrale par réflexion totale atténuée, et concerne plus particulièrement un composant pour réaliser la répartition de lumière vers l'échantillon et la collecte de lumière en provenance de l'échantillon.

### ETAT DE LA TECHNIQUE ANTERIEURE

L'imagerie par réflexion totale atténuée (ATR, pour l'anglais « *Attenuated Total Reflection* ») est une technique d'imagerie, dans laquelle on amène de la lumière dans un prisme accolé contre un échantillon à analyser. La lumière est entièrement réfléchie à une interface entre le composant et l'échantillon à analyser. Une partie de la lumière pénètre néanmoins à l'intérieur de l'échantillon à analyser, sous la forme d'une onde évanescente. Une partie de cette onde évanescente est absorbée par l'échantillon à analyser. La lumière renvoyée par l'échantillon à analyser comporte donc des informations relatives à l'absorption par l'échantillon.

Dans certains cas, l'échantillon à analyser comporte à la fois des composés hautement absorbants et des composés faiblement absorbants sur une même plage de longueurs d'onde. L'absorption par les composés hautement absorbants recouvre alors une absorption par des composés plus faiblement absorbants. Cette situation se présente par exemple lorsque l'échantillon comporte une grande quantité de molécules d'eau et une faible quantité de molécules tierces, dont l'absorption est négligeable relativement à l'absorption par les molécules d'eau. Dans une telle situation, une image basée directement sur des mesures d'absorption n'est pas adaptée.

Pour éviter cet inconvénient, on peut former une image, non pas directement sur la base de mesures d'absorption, mais plutôt sur des mesures de phase (imagerie interférométrique). L'image réalisée est alors une répartition de valeurs locales d'un déphasage apporté par l'échantillon. L'imagerie basée sur des mesures de phase peut être mise en oeuvre à l'aide d'un dispositif interférométrique, fonctionnant sur le principe d'un interféromètre de Mach-Zehnder, et intégrant en outre un moyen de mise en oeuvre d'une réflexion totale atténuée dans un échantillon. Un tel dispositif est décrit par exemple dans l'article « Quantitative imaging of cellular adhesion by total internal reflection holographie microscopy », William M. Ash & al., Applied Optics, December 2009. Le dispositif décrit dans cet article comporte un bras de référence, pour recevoir un faisceau de référence qui n'interagit pas avec l'échantillon, et un bras objet, pour recevoir un faisceau objet qui interagit avec l'échantillon. Le bras objet comporte un prisme, accolé contre un échantillon, pour mettre en oeuvre la réflexion totale atténuée. Le dispositif est relativement complexe, car constitué d'une grande quantité de composants optiques distincts. GB 2 409 034 A divulgue un interféromètre intégré dans un guide d'onde planaire apte à recevoir deux faisceaux lumineux parcourant un trajet différent dans le guide, le guide comportant une zone d'injection composée d'un réseau de diffraction de couplage et d'un diviseur de faisceau formé dans le guide d'onde et d'une zone d'extraction composée de réseaux de diffraction d'extraction formés dans le guide d'onde planaire. YASSINE HADJAR ET AL: "Compact interferometer transducer based on surface plasmon phase résonance", JOURNAL OF THE OPTICAL SOCIETY OF AMERICA A, vol. 32, no. 5, 13 avril 2015, page 771, ISSN: 1084-7529, DOI: 10.1364/JOSAA.32.000771 divulgue un interféromètre intégré dans un guide comportant une zone d'injection composée d'un cube séparateur de faisceau apposé contre le guide d'onde et d'une zone d'extraction composée d'une face latérale du guide d'onde planaire.

Un objectif de la présente invention est de proposer un moyen plus simple pour obtenir une image interférométrique exploitant le phénomène de réflexion totale atténuée.

### PRESENTATION DE L'INVENTION

Cet objectif est atteint avec un composant optique pour un dispositif interférométrique d'imagerie par réflexion totale atténuée, qui comporte :
- un guide d'onde planaire, délimité notamment par une face avant, une face arrière, et des faces latérales, avec la face avant et la face arrière parallèles entre elles et formant les deux faces de plus grande étendue du guide d'onde planaire ;
- une zone d'injection, comportant deux facettes d'entrée formées dans le guide d'onde planaire, lesdites facettes d'entrée étant inclinées en biais relativement au plan des faces avant et arrière du guide d'onde planaire, lesdites facettes d'entrée s'étendant chacune depuis l'une première face latérale du guide d'onde planaire, et lesdites facettes d'entrée étant configurées ensemble pour séparer un faisceau lumineux initial en deux sous-faisceaux déviés chacun dans une direction respective à leur entrée dans le guide d'onde planaire ; et
- une zone d'extraction, comportant deux facettes de sortie formées dans le guide d'onde planaire, lesdites facettes de sortie étant inclinées en biais relativement au plan des faces avant et arrière du guide d'onde planaire, et lesdites facettes de sortie étant configurées pour recevoir les deux sous-faisceaux et pour dévier ces derniers à leur sortie hors du guide d'onde planaire ;
le composant optique étant configuré pour que les deux sous-faisceaux puissent interférer entre eux après avoir émergé hors du guide d'onde planaire.

De préférence, mais de manière non limitative, le faisceau lumineux initial est un faisceau lumineux dans l'infrarouge, et le guide d'onde planaire est apte à guider de la lumière infrarouge. La lumière infrarouge peut inclure la longueur d'onde centrale d'au moins un pic d'absorption d'un composant chimique ou biologique, dont on recherche la présence dans l'échantillon à analyser. Avantageusement, le composant optique selon l'invention est configuré pour traiter de la lumière à des longueurs d'onde utilisées en spectroscopie infrarouge, c'est-à-dire de la lumière appartenant au spectre infrarouge, notamment le moyen infrarouge. En variante, le faisceau lumineux initial peut être un faisceau lumineux dans le visible, et le guide d'onde planaire est apte à guider de la lumière visible. L'invention n'est cependant pas limitée à une gamme de longueurs d'onde en particulier. Dans tout le texte, le terme « infrarouge » se rapporte à une partie du spectre lumineux appartenant à une bande spectrale allant de 0,78 µm à 50 µm, plus préférentiellement de 2 µm à 14 µm (infrarouge moyen). Dans tout le texte, le terme « visible » se rapporte à une partie du spectre lumineux appartenant à une bande spectrale allant de 0,35 µm à 0,78 µm exclu.

En utilisation, le faisceau lumineux initial est injecté dans le guide d'onde planaire, au niveau de la zone d'injection. Le faisceau lumineux initial arrive sur la zone d'injection en s'étendant en partie sur l'une première des facettes d'entrée et en partie sur l'une seconde des facettes d'entrée. Au niveau de la première facette d'entrée, le faisceau lumineux initial pénètre dans le guide d'onde planaire en étant réfracté dans une première direction. Au niveau de la seconde facette d'entrée, le faisceau lumineux initial pénètre dans le guide d'onde planaire en étant réfracté dans une seconde direction, orientée transverse relativement à la première direction. Les deux facettes d'entrée séparent ainsi le faisceau lumineux initial en deux sous-faisceaux, qui se propagent à l'intérieur du guide d'onde planaire dans des directions différentes. On nomme « faisceau objet » l'un premier des deux sous-faisceaux, et « faisceau de référence » l'un second des deux sous-faisceaux.

Le faisceau objet circule dans le guide d'onde planaire, depuis la zone d'injection jusqu'à la zone d'extraction, par réflexions successives sur les faces avant et arrière du guide d'onde planaire, et avec éventuellement une ou plusieurs réflexion(s) sur des faces latérales du guide d'onde planaire. Au cours de sa propagation dans le guide d'onde planaire, la lumière du faisceau objet n'est confinée que selon l'axe de l'épaisseur du guide d'onde planaire. Dans les deux autres dimensions de l'espace, la propagation dans le guide d'onde planaire se traduit par un fort étalement spatial de la lumière. Ainsi, au fur et à mesure des réflexions successives sur les faces avant et arrière du guide d'onde planaire, la lumière du faisceau objet recouvre une surface de plus en plus grande sur la face avant, respectivement arrière du guide d'onde planaire. On peut définir, sur la face arrière du guide d'onde planaire, une surface nommée surface d'analyse. Cette surface d'analyse correspond à une surface de recouvrement entre le faisceau objet et la face arrière du guide d'onde planaire, après plusieurs réflexions sur les faces avant et arrière du guide d'onde planaire. De préférence, la surface d'analyse correspond à la dernière incidence du faisceau objet sur la face arrière du guide d'onde planaire, avant d'atteindre l'une première facette de sortie de la zone d'extraction. En utilisation, un échantillon à analyser est accolé contre la surface d'analyse. Au niveau de la surface d'analyse, la lumière du faisceau objet interagit avec l'échantillon à analyser, selon le principe de la réflexion totale atténuée décrit en introduction. Ensuite, la lumière du faisceau objet se propage jusqu'à la première facette de sortie de la zone d'extraction, et émerge hors du guide d'onde planaire en étant orientée selon une première direction d'extraction.

De façon similaire, le faisceau de référence circule dans le guide d'onde planaire, depuis la zone d'injection jusqu'à la zone d'extraction, par réflexions successives sur les faces avant et arrière du guide d'onde planaire, et avec éventuellement une ou plusieurs réflexion(s) sur des faces latérales du guide d'onde planaire. Là encore, la propagation dans le guide d'onde planaire se traduit par un fort étalement spatial de la lumière. Ainsi, au fur et à mesure des réflexions successives sur les faces avant et arrière du guide d'onde planaire, la lumière du faisceau de référence recouvre une surface de plus en plus grande sur la face avant, respectivement arrière du guide d'onde planaire. On peut définir, sur la face arrière du guide d'onde planaire, une surface nommée surface de référence. Cette surface de référence correspond à une surface de recouvrement entre le faisceau de référence et la face arrière du guide d'onde planaire, après plusieurs réflexions sur les faces avant et arrière du guide d'onde planaire. La surface de référence et la surface d'analyse sont distinctes l'une de l'autre, sans aucun recouvrement entre elles. De préférence, la surface de référence correspond à la dernière incidence du faisceau de référence sur la face arrière du guide d'onde planaire, avant d'atteindre la seconde facette de sortie de la zone d'extraction. En utilisation, un échantillon de référence est accolé contre la surface de référence. L'échantillon de référence peut être constitué par un miroir, ou un échantillon constitué du milieu dans lequel baigne l'échantillon à analyser, ou un échantillon pour lequel le spectre ATR est connu et/ou calibré, etc. Au niveau de la surface de référence, la lumière du faisceau de référence interagit avec l'échantillon de référence, selon le principe de la réflexion totale atténuée. Ensuite, la lumière du faisceau de référence se propage jusqu'à la seconde facette de sortie de la zone d'extraction, et émerge hors du guide d'onde planaire selon une seconde direction d'extraction orientée transverse relativement à la première direction d'extraction. Les première et seconde directions d'extraction se croisent en un point situé en aval de la zone d'extraction dans le sens de propagation de la lumière. Ainsi, le faisceau objet et le faisceau de référence peuvent interférer entre eux après avoir circulé dans le guide d'onde planaire.

Le composant optique selon l'invention permet que le faisceau objet interagisse avec l'échantillon à analyser et le faisceau de référence n'interagisse pas avec l'échantillon à analyser. Le composant optique selon l'invention permet ainsi de réaliser de l'interférométrie. En utilisation, le faisceau objet interagit avec l'échantillon à analyser selon toute une surface, et le faisceau de référence interagit avec l'échantillon de référence selon toute une surface. Les interférences obtenues se rapportent ainsi à toute une surface de l'échantillon à analyser. Le composant optique selon l'invention permet ainsi de réaliser de l'imagerie par réflexion totale atténuée. Le composant optique selon l'invention, combiné à d'autres éléments tels qu'un détecteur matriciel et au moins une source lumineuse, peut ainsi former un dispositif interférométrique exploitant le phénomène de réflexion totale atténuée. Différentes longueurs d'onde peuvent être injectées dans le composant optique selon l'invention pour former un dispositif d'imagerie multi-spectrale.

L'invention permet ainsi de réaliser de l'imagerie interférométrique par réflexion totale atténuée, à l'aide d'un unique composant constitué par le guide d'onde planaire avec ses facettes d'entrée et ses facettes de sortie. L'invention offre donc ainsi un moyen simple et robuste pour obtenir une image interférométrique exploitant le phénomène de réflexion totale atténuée.

Puisque l'image est formée par des mesures de phase, il n'est pas gênant que l'échantillon à analyser comporte à la fois des composés hautement absorbants tels que l'eau, et des composés faiblement absorbants sur une même plage de longueurs d'onde. Cette image peut être utilisée pour déterminer une répartition de compositions chimiques ou biologiques locales sur l'échantillon à analyser, en exploitant le fait que chaque composé chimique ou biologique absorbe (et déphase) certaines fréquences d'un rayonnement incident, avec une signature propre permettant une identification (identification par spectroscopie, notamment spectroscopie infrarouge). On peut ainsi déterminer la composition chimique ou biologique de l'échantillon à analyser, même en présence de composés hautement absorbants susceptibles de recouvrir la signature d'autres composés plus faiblement absorbants dans la même gamme de longueurs d'onde.

De préférence, les deux facettes d'entrée forment deux faces latérales adjacentes d'une première pyramide. Ladite première pyramide peut être une pyramide droite à base carrée.

Selon un premier mode de réalisation avantageux, les deux facettes de sortie s'étendent chacune depuis une seconde face latérale du guide d'onde planaire, avec les première et seconde faces latérales du guide d'onde planaire situées au regard l'une de l'autre. Les deux facettes de sortie peuvent former deux faces latérales adjacentes d'une seconde pyramide entière ou tronquée. Ladite seconde pyramide peut être une pyramide droite à base carrée. Le composant optique selon l'invention peut présenter une symétrie planaire, relativement à un plan de symétrie orthogonal au plan des faces avant et arrière du guide d'onde planaire, et passant par le centre de la zone d'injection et par le centre de la zone d'extraction. Avantageusement, le guide d'onde planaire comporte une troisième face latérale et une quatrième face latérale, situées au regard l'une de l'autre et s'étendant chacune entre la première face latérale recevant la zone d'injection et la seconde face latérale recevant la zone d'extraction, et inclinées entre elles de sorte qu'une distance entre la troisième face latérale et la quatrième face latérale diminue au fur et à mesure que l'on s'éloigne de la zone d'injection et que l'on se rapproche de la zone d'extraction.

Selon un deuxième mode de réalisation avantageux, la zone d'extraction est entièrement entourée par le matériau du guide d'onde planaire. La zone d'extraction peut comporter au moins quatre facettes, parmi lesquelles les deux facettes de sortie qui sont situées au regard l'une de l'autre. Les au moins quatre facettes peuvent être toutes inclinées d'un même angle relativement au plan des faces avant et arrière du guide d'onde planaire.

De manière avantageuse :
- la zone d'injection est configurée pour réaliser l'injection, dans le guide d'onde planaire, de rayons lumineux provenant d'un demi-espace avant ; et
- la zone d'extraction est configurée pour réaliser l'extraction de rayons lumineux, hors du guide d'onde planaire, et vers ledit demi-espace avant ;
où le demi-espace avant est délimité par un plan passant par la face avant du guide d'onde planaire, et s'étend du côté opposé au guide d'onde planaire.

L'invention couvre également un système qui comporte :
- un composant optique selon l'invention ; et
- un détecteur matriciel, configuré pour acquérir une figure d'interférence formée par une partie au moins de la lumière émergeant du composant optique par l'une des facettes de sortie et une partie au moins de la lumière émergeant du composant optique par l'autre des facettes de sortie.

Le système peut comporter en outre un module de traitement configuré pour :
- recevoir en entrée au moins une image acquise par le détecteur matriciel ;
- effectuer un traitement de ladite image de manière à en déduire des valeurs locales de déphasage ; et
- fournir en sortie une image d'un échantillon à analyser, formée à partir desdites valeurs locales de déphasage.

L'invention couvre enfin un procédé d'utilisation d'un composant optique selon l'invention, qui comporte les étapes suivantes :
- disposition d'une surface d'intérêt d'un échantillon à analyser, contre une surface d'analyse formée par une première région de la face arrière du guide d'onde planaire, et disposition d'une surface d'intérêt d'un échantillon de référence, contre une surface de référence formée par une seconde région de la face arrière du guide d'onde planaire ;
- injection de lumière dans le guide d'onde planaire, au niveau de la zone d'injection, de manière à ce qu'une partie de la lumière injectée se propage dans le guide d'onde planaire, depuis la zone d'injection jusqu'à l'une des facettes de sortie de la zone d'extraction, en passant par la surface d'analyse, et de manière à ce qu'une autre partie de la lumière injectée se propage dans le guide d'onde planaire, depuis la zone d'injection jusqu'à l'autre des facettes de sortie de la zone d'extraction, en passant par la surface de référence ; et
- détection d'une figure d'interférence formée par la lumière émergeant du guide d'onde planaire respectivement par la première facette de sortie et par la seconde facette de sortie.

### BREVE DESCRIPTION DES FIGURES

La présente invention sera mieux comprise à la lecture de la description d'exemples de réalisation donnés à titre purement indicatif et nullement limitatif, en faisant référence aux dessins annexés sur lesquels :
- la figure 1 illustre de façon schématique, selon une vue en perspective et en transparence, un composant optique selon un premier mode de réalisation de l'invention ;
- les figures 2A à 2D illustrent différentes vues montrant tout ou partie du composant optique de la figure 1, et illustrant la propagation de la lumière dans ce dernier ;
- la figure 3 illustre de façon schématique, selon une vue en coupe dans un plan parallèle aux faces avant et arrière du guide d'onde planaire, un composant optique selon une variante du premier mode de réalisation de l'invention ;
- la figure 4 illustre une simulation de tracé de rayons dans le composant optique de la figure 3 ;
- les figures 5A à 5C illustrent de façon schématique des pyramides définissant les formes respectives de la zone d'injection et de la zone d'extraction dans le composant optique de la figure 3 ;
- la figure 6 illustre de façon schématique, selon une vue en perspective, le composant optique de la figure 3, en utilisation ;
- la figure 7A illustre de façon schématique, selon une vue de dessus en transparence, un composant optique selon un deuxième mode de réalisation de l'invention ;
- la figure 7B illustre de façon schématique, selon une vue de dessus en transparence, un composant optique selon une variante du deuxième mode de réalisation de l'invention ;
- la figure 8 illustre de façon schématique un premier exemple d'un système selon l'invention ; et
- la figure 9 illustre de façon schématique un deuxième exemple d'un système selon l'invention.

### DESCRIPTION DES MODES DE REALISATION

Pour faciliter la lecture, on a représenté sur les figures les axes d'un repère orthonormé (Oxyz).

Dans tout le texte, un guide d'onde planaire désigne un élément de guidage optique, apte à guider la propagation de la lumière par réflexions successives sur des faces planes parallèles entre elles (ici, il s'agit plus particulièrement d'un guidage réfractif). Dans un guide d'onde planaire, la lumière est confinée selon l'un des axes de l'espace à trois dimensions, et libre de se propager selon les deux autres axes de l'espace à trois dimensions. Formellement, un guide d'onde est constitué d'un coeur, dans lequel circule la lumière, et d'une gaine, assurant une différence d'indice optique souhaitée entre le coeur et un milieu entourant le coeur. Par abus de langage, le coeur peut être assimilé à un guide d'onde, la gaine étant constituée alors par le milieu gazeux ou liquide environnant. Ici, un guide d'onde planaire désigne donc le coeur d'un guide d'onde planaire. Le guide d'onde planaire est constitué en pratique d'une pièce optique présentant une dimension réduite selon l'un des axes de l'espace à trois dimensions (ici l'axe (Oz) de l'épaisseur), et de grandes dimensions selon chacun des deux autres axes de l'espace à trois dimensions (ici les axes (Ox) et (Oy) de la longueur, respectivement la largeur). Le rapport entre l'épaisseur et la longueur, respectivement entre l'épaisseur et la largeur, est de préférence supérieur ou égal à 5, voire supérieur ou égal à 10. La pièce optique est constituée d'un matériau optiquement transparent aux longueurs d'onde à propager, par exemple avec un taux de transmission supérieur ou égal -3 dB/cm auxdites longueurs d'onde. Cette pièce optique est de préférence monolithique, formée d'un seul tenant. Elle présente avantageusement un indice optique homogène selon tout son volume, avec une composition chimique identique selon tout son volume.

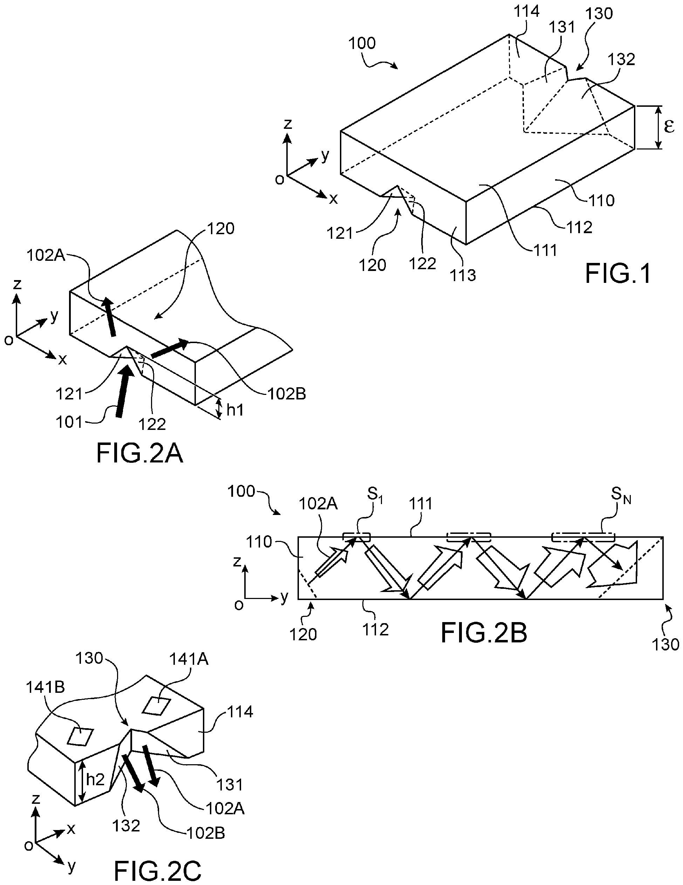

On décrit pour commencer un premier mode de réalisation d'un composant optique 100 selon l'invention, représenté à la figure 1 selon une vue en perspective.

Le composant optique 100 comporte un guide d'onde planaire 110. Le guide d'onde planaire 110 est configuré pour guider de la lumière dans des plans parallèles au plan (Oxy), ici de la lumière infrarouge. Il est donc constitué d'un matériau optiquement transparent dans l'infrarouge, par exemple du silicium. En variante, le guide d'onde planaire 110 peut être configuré pour guider de la lumière visible. Il est alors constitué d'un matériau optiquement transparent dans le visible, par exemple le diamant ou, s'il est réalisé par moulage, un verre (SiO₂, BF33, quartz, etc) ou un polymère optique.

De préférence, le guide d'onde planaire 110 présente sensiblement la forme d'un parallélépipède rectangle à base carrée ou rectangulaire. Ici, il présente exactement cette forme. Il est délimité, le long de l'axe (Oz), par deux faces 111, 112 parallèles au plan (xOy), et nommées respectivement face arrière 111 et face avant 112. La face arrière 111 et la face avant 112 sont les faces du guide d'onde planaire de plus grande aire, ici de forme rectangulaire. L'épaisseur ε du guide d'onde planaire 110 est comprise de préférence entre 100 µm et 1,5 mm, de préférence entre 100 µm et 1,0 mm, par exemple égale à 725 µm. La longueur et la largeur du guide d'onde planaire 110 sont par exemple comprises chacune entre 5 mm et 20 mm.

Le guide d'onde planaire comporte une zone d'injection 120. La zone d'injection 120 est configurée pour permettre l'injection de lumière dans le guide d'onde planaire 110. La zone d'injection 120 est constituée ici de deux facettes d'entrée 121 et 122, formant chacune une interface entre le guide d'onde planaire 110 et le milieu environnant. Les facettes d'entrée 121 et 122 sont chacune inclinées en biais relativement au plan (Oxy) des faces avant et arrière du guide d'onde planaire. Dit autrement, elles sont chacune inclinées d'un angle non nul et distinct de l'angle droit, relativement auxdites faces avant et arrière. Les facettes d'entrée 121 et 122 s'étendent toutes deux entre la face avant 112 du guide d'onde planaire 110, et une première face latérale 113 du guide d'onde planaire 110. Les facettes d'entrée 121 et 122 sont configurées ensemble pour séparer un faisceau lumineux initial en deux sous-faisceaux, déviés chacun dans une direction respective à leur entrée dans le guide d'onde planaire.

Le guide d'onde planaire comporte en outre une zone d'extraction 130. La zone d'extraction 130 est configurée pour permettre l'extraction de lumière hors du guide d'onde planaire 110, où la lumière extraite est la lumière ayant été injectée au niveau de la zone d'injection 120. La zone d'extraction 130 est constituée ici de deux facettes de sortie 131 et 132, formant chacune une interface entre le guide d'onde planaire 110 et le milieu environnant. Les facettes de sortie 131 et 132 sont chacune inclinées en biais relativement au plan (Oxy) des faces avant et arrière du guide d'onde planaire. Chacune des facettes de sortie 131, 132 est configurées pour recevoir la lumière de l'un respectif deux sous-faisceaux mentionnés ci-dessus, et laisser passer cette lumière hors du guide d'onde planaire. A la traversée des facettes de sortie 131, 132, la lumière des deux sous-faisceaux est déviée de sorte.

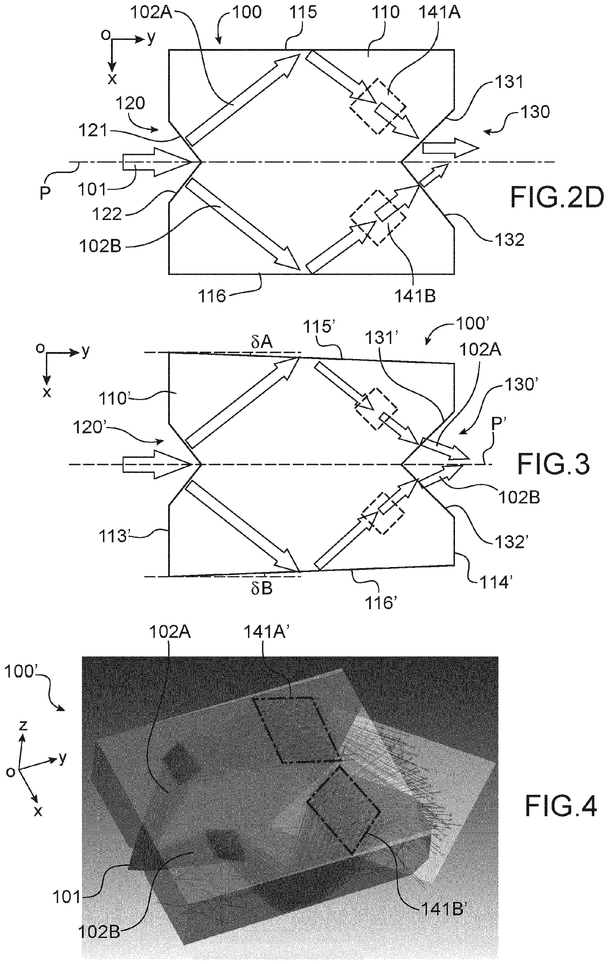

La géométrie du composant optique 100 est adaptée de manière que les deux sous-faisceaux puissent interférer entre eux, après avoir émergé hors du guide d'onde planaire. Cette adaptation concerne en particulier l'orientation des facettes d'entrée 121 et 122, et/ou l'orientation des facettes de sortie 131 et 132, et/ou l'orientation de deux faces latérales du guide d'onde planaire (voir figure 3). De préférence, cette géométrie est adaptée à un faisceau lumineux initial qui est orienté dans un plan (Oyz), de préférence un plan (Oyz) passant par le centre de la zone d'injection. Il peut s'agir d'un plan (Oyz) formant un plan de symétrie pour le guide d'onde planaire considéré seul (sans la zone d'injection ni la zone d'extraction).

Dans cet exemple, la zone d'injection 120 et la zone d'extraction 130 forment chacune un renfoncement respectif dans le guide d'onde planaire, s'enfonçant dans le guide d'onde planaire depuis sa face latérale 113, respectivement depuis sa face latérale 114 du côté opposé à la face latérale 113.

On décrit ensuite, en référence aux figures 2A à 2D, la propagation de la lumière dans le composant optique 100 de la figure 1. En fonctionnement, le composant optique 100 est immergé dans un milieu environnant gazeux ou liquide, de préférence de l'air.

A la figure 2A, on a représenté en perspective une vue de détail du composant optique 100. La figure 2A illustre plus spécifiquement la zone d'injection 120, en utilisation. Les deux facettes d'entrée 121, 122 sont inclinées entre elles, de manière à dévier chacune la lumière vers une direction distincte. En utilisation, un faisceau lumineux initial 101 arrive sur les facettes d'entrée 121 et 122. Le faisceau lumineux initial 101 comporte de préférence une composante parallèle à l'axe (Oz). De préférence, le faisceau lumineux initial 101 s'étend dans un plan (Oyz), ici un plan (Oyz) formant un plan de symétrie pour le guide d'onde planaire considéré seul (sans la zone d'injection ni la zone d'extraction). Une partie du faisceau lumineux initial 101 arrive sur la première facette d'entrée 121, avec une incidence telle que la lumière pénètre à l'intérieur du guide d'onde planaire, en étant réfractée dans une première direction, et forme un sous-faisceau 102A. Une autre partie du faisceau lumineux initial 101 arrive sur la seconde facette d'entrée 122, avec une incidence telle que la lumière pénètre à l'intérieur du guide d'onde planaire, en étant réfractée dans une seconde direction distincte de la première direction, et forme un sous-faisceau 102B. Ici, les deux facettes d'entrée 121, 122 sont adjacentes, de sorte que les deux facettes d'entrée 121, 122 reçoivent ensemble toute la lumière du faisceau lumineux initial 101. Ainsi, lorsqu'il traverse la zone d'injection 120 pour pénétrer à l'intérieur du guide d'onde planaire 110, le faisceau lumineux initial 101 est séparé en deux sous-faisceaux 102A, respectivement 102B. De préférence, la répartition de flux entre les deux sous-faisceaux est une répartition 50%-50%. D'autres répartitions peuvent cependant être envisagées, par exemple pour compenser une très forte absorption de l'échantillon à analyser.

Ici, le faisceau lumineux initial 101 arrive sur les facettes d'entrée 121, 122, depuis un demi-espace délimité par le plan de la face avant 112 du guide d'onde planaire 110 et situé du côté opposé au guide d'onde planaire.

Ici, les facettes d'entrée 121, 122 sont symétriques l'une de l'autre relativement à un plan de symétrie parallèle au plan (Oyz), où le plan (Oyz) est orthogonal au plan des faces avant et arrière du guide d'onde planaire 110. Ainsi, à leur entrée dans le guide d'onde planaire, les sous-faisceaux 102A et 102B sont symétriques l'un de l'autre relativement à ce plan de symétrie.

Dans l'exemple illustré ici, la hauteur h1 de la zone d'injection, mesurée selon l'axe (Oz), est strictement inférieure à l'épaisseur ε du guide d'onde planaire. Un rapport entre l'épaisseur ε et la hauteur h1 est par exemple supérieur ou égal à deux. L'invention n'est cependant pas limitée à un tel rapport, et couvre même des variantes dans lesquelles la hauteur h1 de la zone d'injection est égale à l'épaisseur ε du guide d'onde planaire.

La figure 2B est une représentation schématique du composant optique 100, selon une vue de côté et en transparence. Cette figure montre, à titre d'exemple, la propagation du sous-faisceau 102A dans le guide d'onde planaire 110, étant entendu que le sous-faisceau 102B se propage selon le même principe. Les sous-faisceaux 102A et 102B se propagent chacun à l'intérieur du guide d'onde planaire 110, par réflexions successives sur les faces avant 112 et arrière 111 de ce dernier. A l'intérieur du guide d'onde planaire 110, les sous-faisceaux 102A et 102B ne se rencontrent pas. Au fur et à mesure de leur propagation dans le guide d'onde planaire 110, chacun des sous-faisceaux 102A, 102B s'étale dans des plans parallèles au plan (Oxy).

De préférence, le faisceau lumineux initial 101 est divergeant, même très légèrement. L'intersection entre le sous-faisceau 102A, respectivement 102B, et la face arrière 111 du guide d'onde planaire, est alors une surface S₁, ..., S_{N}, dont l'aire augmente au fur et à mesure de la propagation de la lumière dans le guide d'onde planaire 110. On définit, sur la face arrière 111 du guide d'onde planaire, une surface d'analyse 141A (voir figure 2C). La surface d'analyse 141A correspond ici à l'intersection entre le sous-faisceau 102A et la face arrière 111 du guide d'onde planaire, au niveau de la dernière incidence du sous-faisceau 102A sur ladite face arrière. La surface d'analyse présente donc une aire bien supérieure à la section du sous-faisceau 102A à l'injection dans le guide d'onde planaire. On a par exemple un rapport supérieur ou égal à 5, et même supérieur ou égal à 10, entre l'aire de la surface d'analyse 141A et la section du sous-faisceau 102A à l'injection dans le guide d'onde planaire. De façon similaire, on définit, sur la face arrière 111 du guide d'onde planaire, une surface de référence 141B (voir figure 2C). La surface de référence 141B correspond à l'intersection entre le sous-faisceau 102B et la face arrière 111 du guide d'onde planaire, au niveau de la dernière incidence du sous-faisceau 102B sur ladite face arrière. De façon similaire, la surface de référence présente donc une aire bien supérieure à la section du sous-faisceau 102B à l'injection dans le guide d'onde planaire. La surface d'analyse 141A et la surface de référence 141B présentent de préférence une même aire.

A la figure 2C, on a représenté en perspective une vue de détail du composant optique 100, montrant plus spécifiquement la zone d'extraction 130, en utilisation. Après une ultime réflexion sur la face arrière 111 du guide d'onde planaire, le sous-faisceau 102A émerge hors du guide d'onde planaire, en traversant la première facette de sortie 131. De la même manière, après une ultime réflexion sur la face arrière 111 du guide d'onde planaire, le sous-faisceau 102B émerge hors du guide d'onde planaire, en traversant la seconde facette de sortie 132. Les deux facettes de sortie 131, 132 sont inclinées entre elles. Elles sont configurées ensemble pour dévier les sous-faisceaux 102A et 102B vers l'extérieur du guide d'onde planaire, ici dans un demi-espace qui est délimité par le plan de la face avant 112 du guide d'onde planaire 110 et qui est situé du côté opposé au guide d'onde planaire. Ici, les facettes de sortie 131 et 132 s'étendent toutes deux entre la face avant 112, la face arrière 111, et une seconde face latérale 114 du guide d'onde planaire 110, du côté opposé à la première face latérale 113. Ainsi, la hauteur h2 de la zone d'extraction, mesurée selon l'axe (Oz), est égale à l'épaisseur ε du guide d'onde planaire. Ici, les deux facettes de sortie 131, 132 sont adjacentes entre elles.

Ici, les sous-faisceaux 102A et 102B arrivant sur les facettes de sortie 131, 132 sont symétriques l'un de l'autre, relativement un plan de symétrie parallèle au plan (Oyz). Les deux facettes de sortie 131, 132 sont aptes à dévier les sous-faisceaux 102A et 102B, de manière à ce qu'ils interfèrent entre eux après avoir émergé hors du guide d'onde planaire. Pour cela, les deux facettes de sortie 131, 132 présentent entre elles une dissymétrie, relativement audit plan de symétrie parallèle au plan (Oyz).

La figure 2D illustre de façon schématique le composant optique 100, représenté selon une vue en coupe dans un plan (Oxy) passant par la zone d'injection 120. Sur la figure 2D, on a représenté la propagation de la lumière dans le guide d'onde planaire 110, selon une projection dans un plan (Oxy). Le sous-faisceau 102A se propage depuis la première facette 121 de la zone d'injection jusqu'à la première facette 131 de la zone d'extraction, en étant réfléchi une fois sur la face latérale 115 du guide d'onde planaire. La face latérale 115 est située entre les faces latérales 113 et 114, et s'étend ici parallèle au plan (Oyz). Le sous-faisceau 102A passe par la zone d'analyse 141A, représentée ici en transparence par des pointillés. De façon similaire, le sous-faisceau 102B se propage depuis la seconde facette 122 de la zone d'injection jusqu'à la seconde facette 132 de la zone d'extraction, en étant réfléchi une fois sur la face latérale 116 du guide d'onde planaire. La face latérale 116 est située du côté opposé à la face latérale 115, et s'étend ici parallèle au plan (Oyz). Le sous-faisceau 102B passe par la zone de référence 141B, représentée ici en transparence par des pointillés.

Comme le montre notamment la figure 2D, le composant optique 100 est sensiblement symétrique, par une symétrie planaire relativement à un plan de symétrie P parallèle au plan (Oyz) et passant par le centre de la zone d'injection 120 et par le centre de la zone d'extraction 130. Lorsque le faisceau lumineux initial 101 est orienté selon un axe situé dans le plan P, cette symétrie permet que les sous-faisceaux 102A et 102B parcourent des chemins optiques respectifs de mêmes longueurs dans le guide d'onde planaire. On définit ainsi, dans le guide d'onde planaire, un bras de référence et un bras objet qui ont tous les deux la même longueur optique. Ici, la symétrie n'est pas parfaite, en raison simplement de la légère dysmétrie de la zone d'extraction 130. La surface d'analyse 141A et la surface de référence 141B sont en revanche parfaitement symétriques l'une de l'autre relativement au plan P.

Selon l'invention, les sous-faisceaux 102A et 102B émergeant du composant optique 100 doivent pouvoir interférer entre eux. Pour cela, ils doivent être orientés selon des directions sécantes. Dans l'exemple illustré ici, cette caractéristique est obtenue en jouant sur l'orientation des deux facettes de sortie 131, 132. En complément ou en variante, cette caractéristique peut être obtenue en jouant sur l'orientation des deux facettes d'entrée 121, 122. En complément ou en variante, cette caractéristique peut être obtenue en jouant sur l'orientation de faces latérales du guide d'onde planaire (voir figure 3). Ces différentes solutions peuvent être combinées entre elles. Selon une autre variante encore, cette caractéristique peut être obtenue en jouant plutôt sur l'orientation du faisceau lumineux initial arrivant sur la zone d'injection (le faisceau lumineux initial devant alors être légèrement incliné relativement au plan P).

La figure 3 illustre de façon schématique, un composant optique 100', représenté selon une vue en coupe dans un plan (Oxy) parallèle au plan des faces avant et arrière du guide d'onde planaire. Le composant optique 100' ne diffère du composant optique de la figure 1, que par l'orientation des faces latérales 115', 116' du guide d'onde planaire 110', et par l'orientation des facettes de sortie 131', 132' du guide d'onde planaire.

La face latérale 115' s'étend entre la première face latérale 113' recevant la zone d'injection 120', et la deuxième face latérale 114' recevant la zone d'extraction 130'. La face latérale 115' est inclinée d'un petit angle δA relativement au plan (Oyz), où le plan (Oyz) est parallèle au plan de symétrie P' du composant optique 100'. L'angle δA est compris avantageusement entre 0,50° et 5,00°, par exemple égal à 1,23°.

La face latérale 116' s'étend au regard de la face latérale 115', entre la première face latérale 113' et la deuxième face latérale 114'. Du fait de la symétrie du composant optique 100', la face latérale 116' est inclinée d'un angle δB relativement au plan (Oyz). L'angle δB est compris avantageusement entre 0,50° et 5,00°. De préférence, les angles δA et δB sont égaux en valeur absolue. En variante, la différence en valeur absolue entre ces deux angles peut être non nulle. Cette variante peut permettre, grâce au phénomène de moiré, d'obtenir une image avec des franges d'interférence dont l'interfrange est compatible avec les dimensions d'un détecteur.

L'inclinaison des faces latérales 115' et 116' est telle, qu'une distance entre ces dernières diminue, au fur et à mesure que l'on s'éloigne de la zone d'injection 120' et que l'on se rapproche de la zone d'extraction 130', le long de l'axe (Oy). L'axe (Oy) correspond à un axe reliant la zone d'injection et la zone d'extraction. La distance entre les faces latérales 115' et 116' est mesurée selon l'axe (Ox), avec les axes (Ox) et (Oy) orthogonaux entre eux et parallèles au plan des faces avant, respectivement arrière du guide d'onde planaire.

Cette légère inclinaison des faces latérales 115' et 116' permet de s'assurer que, en utilisation, les sous-faisceaux 102A et 102B émergeant de la zone d'extraction 130' se croisent et interfèrent ensemble. Les facettes de sortie 131, 132 peuvent alors être symétriques l'une de l'autre relativement au plan P', où le plan P' s'étend parallèle au plan (Oyz) en passant par le centre de la zone d'injection et le centre de la zone d'extraction. Ici, les facettes de sortie 131', 132' sont symétriques l'une de l'autre relativement au plan P', et les angles δA et δB sont égaux en valeur absolue, de sorte que le composant optique 100' présente une symétrie parfaite relativement au plan P'. Ici, et de manière avantageuse, les facettes de sortie 131', 132' sont parallèles deux à deux avec les facettes d'entrée.

La figure 4 illustre le composant optique 100', selon une vue en perspective, ainsi qu'une simulation de tracé de rayons dans ledit composant. La figure 4 montre notamment le faisceau lumineux initial 101, les sous faisceaux 102A, 102B, la surface d'analyse 141A' et la surface de référence 141B'. Dans cette simulation, le guide d'onde planaire présente une épaisseur de 1 mm. Les facettes d'entrée et les facettes de sortie sont toutes inclinées à 54,74° relativement au plan (Oxy). Les facettes d'entrée sont gravées sur une profondeur de 300 µm dans le guide d'onde planaire. Les facettes de sortie sont gravées sur toute l'épaisseur du guide d'onde planaire. La face avant du guide d'onde planaire a une forme rectangulaire de dimension 3,6 mm x 4,2 mm environ. L'angle δA= δB vaut 1,23°. La simulation confirme qu'on obtient le comportement attendu de la lumière.

La simulation confirme également que, dans le mode de réalisation de la figure 3, le sous-faisceau se propageant sur le bras de référence et le sous-faisceau se propageant sur le bras objet, circulent dans le composant optique selon l'invention avec autant de réflexion l'un que l'autre sur les faces avant et arrière, et sur les faces latérales du guide d'onde planaire. Cette caractéristique se vérifie également dans le mode de réalisation des figures 1 et 2A à 2D, et dans leurs variantes mentionnées ci-dessus.

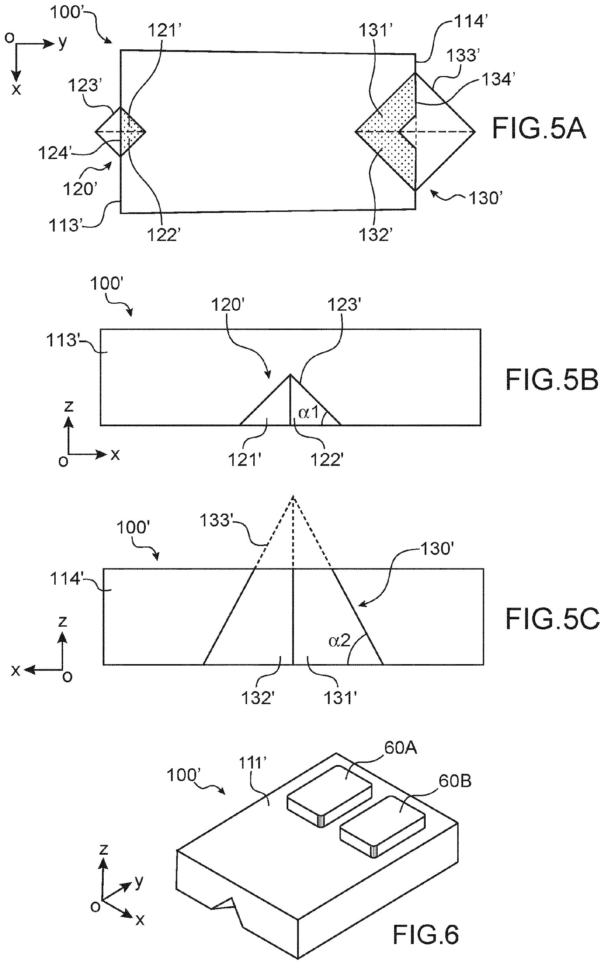

La figure 5A illustre ici le composant optique 100' de la figure 3, selon une vue de dessus. La figure 5A permet d'illustrer plus précisément une forme de la zone d'injection et une forme de la zone d'extraction.

Dans la zone d'injection 120', les facettes d'entrée 121', 122' correspondent à deux faces latérales adjacentes d'une première pyramide 123', entière ou tronquée. La hauteur de la première pyramide 123' est ici strictement inférieure à l'épaisseur du guide d'onde planaire, de sorte que les facettes d'entrée 121', 122' correspondent à deux faces latérales adjacentes de la première pyramide 123', entière. La zone d'injection 120' a la forme d'une moitié de cette pyramide entière. Cette moitié de pyramide est représentée en pointillés, et correspond à la pyramide 123' coupée selon un plan (Oxz) passant par son apex.

Ici, la première pyramide 123' est une pyramide droite à base carrée, avec la base parallèle au plan (Oxy). Une diagonale 124' de ladite base carrée s'étend le long d'un axe passant par une arête du guide d'onde planaire, où ladite arête définit l'intersection entre la face avant et une face latérale du guide d'onde planaire. Chacune des facettes d'entrée 121', 122' est donc inclinée d'un même angle α1 relativement au plan (Oxy) des faces avant et arrière du guide d'onde planaire. Cet angle α1 est représenté à la figure 5B, montrant le composant optique 100' selon une vue de côté dans un plan parallèle au plan (Oxz). On a de préférence α1=54,74°, ce qui correspond à un angle de gravure anisotrope d'un plan cristallin (plan 111) dans un cristal de type cubique à faces centrés (par exemple du silicium) ou dans un cristal à maille carrée de type diamant. En variante, on peut avoir α1=45° (plan 110 d'un cristal cubique à faces centrées). L'invention n'est cependant pas limitée à ces deux valeurs d'angle.

Dans la zone d'extraction 130', les facettes de sortie 131', 132' correspondent à deux faces latérales adjacentes d'une seconde pyramide 133', entière ou tronquée. Ici, les facettes de sortie 131', 132' s'étendent ici selon toute l'épaisseur du guide d'onde planaire, chacune entre la face arrière, la face avant et la seconde face latérale 114' du guide d'onde planaire. Les facettes de sortie 131', 132' correspondent donc à deux faces latérales adjacentes d'une seconde pyramide 133', tronquée selon un plan parallèle au plan (Oxy). La hauteur de la seconde pyramide 133' est donc ici strictement supérieure à l'épaisseur du guide d'onde planaire. La zone d'extraction 130' a ici la forme d'une moitié de cette pyramide tronquée. Cette moitié est représentée en pointillés, et correspond à la pyramide 133', tronquée dans un plan (Oxy), et coupée selon un plan (Oxz) passant par son apex.

Ici, la seconde pyramide 133' est une pyramide droite à base carrée, avec la base parallèle au plan (Oxy). Une diagonale 134' de ladite base carrée s'étend le long d'un axe passant par une arête du guide d'onde planaire, où ladite arête définit l'intersection entre la face avant et une face latérale du guide d'onde planaire. Chacune des facettes d'entrée 131', 132' est donc inclinée d'un même angle α2 relativement au plan (Oxy) des faces avant et arrière du guide d'onde planaire. Cet angle α2 est représenté à la figure 5C, montrant le composant optique 100' selon une vue de côté dans un plan parallèle au plan (Oxz). On a de préférence α2=54,74°, ou α2=45°. L'invention n'est cependant pas limitée à ces deux valeurs d'angle. Par ailleurs, les angles α2 et α1 peuvent être égaux entre eux, ou distincts l'un de l'autre.

Dans des variantes non représentées, les facettes de sortie 131', 132' s'étendent selon une partie seulement de l'épaisseur du guide d'onde planaire. Elles peuvent correspondre, là encore, à deux faces latérales adjacentes d'une seconde pyramide, entière ou tronquée. En tout état de cause, elles s'étendent, là encore, depuis la seconde face latérale 114' du guide d'onde planaire, du côté opposé à la première face latérale 113'.

La figure 6 illustre de façon schématique, selon une vue en perspective, un composant optique selon l'invention, en utilisation (ici le composant optique 100'). Le composant optique 100' est utilisé avec un échantillon d'analyse 60A et un échantillon de référence 60B.

L'échantillon d'analyse 60A est un échantillon dont on souhaite déterminer une composition chimique ou biologique. Il est accolé contre la face arrière 111' du guide d'onde planaire, au niveau de la surface d'analyse telle que décrite ci-avant.

L'échantillon de référence 60B est ici un échantillon dont la composition chimique ou biologique est connue, et de préférence uniforme sur tout son volume. De préférence, il est associé à un spectre connu de sa réflexion totale atténuée. En variante, l'échantillon de référence peut être constitué par un miroir entièrement réfléchissant à la longueur d'onde du faisceau lumineux initial 101, ou un échantillon constitué du milieu dans lequel baigne l'échantillon à analyser (par exemple un milieu aqueux), ou un échantillon pour lequel le spectre ATR est connu et/ou calibré, etc. L'échantillon de référence 60B est accolé contre la face arrière 111' du guide d'onde planaire, au niveau de la surface de référence telle que décrite ci-avant.

En utilisation, la lumière est injectée dans le guide d'onde planaire, comme décrit ci-avant. Le sous-faisceau 102A forme un faisceau objet, passant par la surface d'analyse. Au niveau de la surface d'analyse, une partie de la lumière du faisceau objet pénètre à l'intérieur de l'échantillon à analyser 60A, sous la forme d'une onde évanescente. La lumière renvoyée par la surface d'analyse inclut donc une onde ayant transité dans l'échantillon à analyser, et ayant étant été déphasée et partiellement absorbée par ce dernier. Le faisceau objet émerge ensuite hors du guide d'onde planaire, par la première facette de sortie.

Le sous-faisceau 102B forme quant-à-lui un faisceau de référence, passant par la surface de référence. Au niveau de la surface de référence, une partie de la lumière du faisceau de référence pénètre à l'intérieur de l'échantillon de référence 60B, sous la forme d'une onde évanescente. La lumière renvoyée par la surface de référence inclut donc une onde ayant transité dans l'échantillon de référence, et ayant étant été déphasée et partiellement absorbée par ce dernier. Le faisceau de référence émerge ensuit hors du guide d'onde planaire, par la seconde facette de sortie.

Le faisceau objet émergeant hors du guide d'onde planaire inclut des informations relatives à l'échantillon à analyser 60A, contenues notamment dans sa phase. Ces informations se rapportent à une surface entière de l'échantillon à analyser 60A, correspondant à la surface de ce dernier recouvrant la surface d'analyse.

Le faisceau de référence émergeant hors du guide d'onde planaire présente quant-à-lui des caractéristiques connues, puisque fonctions des caractéristiques connues (et de préférence constantes dans l'espace) de l'échantillon de référence.

Le composant optique selon l'invention est configuré pour que le faisceau de référence et le faisceau objet émergeant tous deux hors du guide d'onde planaire interfèrent entre eux. La figure d'interférence ainsi obtenue permet de déterminer une répartition de valeurs de déphasages, sur l'échantillon à analyser. A partir de cette répartition de valeurs de déphasages, on peut déterminer une répartition de compositions chimiques ou biologiques locales dans l'échantillon à analyser. L'invention permet d'obtenir directement des valeurs de déphasage pour une pluralité de points sur l'échantillon à analyser, sans étape de balayage pour déplacer le composant optique relativement à l'échantillon à analyser.

Dans l'explication ci-dessus, on suppose que le sous-faisceau 102A forme le faisceau objet et le sous-faisceau 102B forme le faisceau de référence. Il est évident que ces fonctions peuvent être échangées.

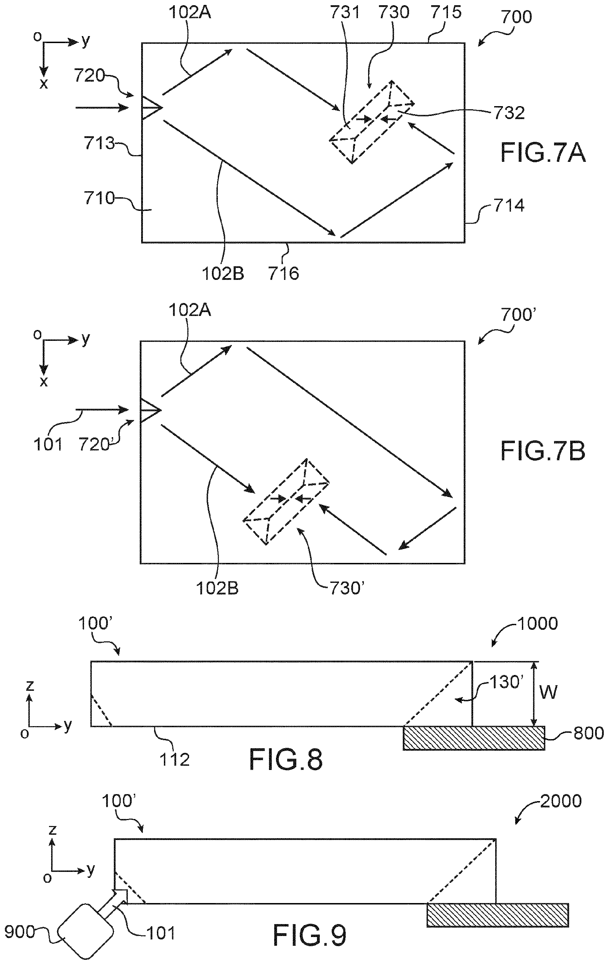

La figure 7A illustre, selon une vue de dessus en transparence, un composant optique 700 selon un deuxième mode de réalisation de l'invention, qui ne sera décrit que pour ses différences relativement au mode de réalisation de la figure 1.

Dans ce mode de réalisation, la zone d'extraction 730 est entièrement entourée par le matériau du guide d'onde planaire 710. La zone d'extraction 730 est constituée ici de quatre facettes, inclinées en biais relativement au plan (Oxy) des faces avant et arrière du guide d'onde planaire. Les quatre facettes comprennent deux facettes de sortie 731, 732, qui diffèrent des facettes de sortie du premier mode de réalisation en ce qu'elles s'étendent ici au regard l'une de l'autre, et non adjacentes l'une à l'autre.

Ici, les quatre facettes sont toutes inclinées d'un même angle relativement au plan (Oxy). Elles peuvent présenter chacune une même forme, et délimiter ainsi un volume en forme de pyramide entière ou tronquée. En variante, et comme illustré à la figure 7A, les facettes de sortie ont chacune une même forme, ici une forme de trapèze, distincte de la forme des deux autres facettes.

Ici, les facettes de sortie 731, 732 sont symétriques l'une de l'autre relativement à un plan de symétrie orthogonal au plan (Oxy) et orienté en biais relativement à l'axe (Oy), où l'axe (Oy) s'étend orthogonal à la face latérale d'entrée 713. Ici, ce plan de symétrie est orienté à 45° relativement à l'axe (Oy).

La zone d'extraction 730 peut former un simple renfoncement dans le guide d'onde planaire, ou une ouverture traversante traversant de part en part le guide d'onde planaire dans le sens de l'épaisseur.

Dans ce mode de réalisation, le sous-faisceau 102A est réfléchi une seule fois sur une face latérale du guide d'onde planaire 710, avant d'atteindre la première facette de sortie 731. Ici, le sous-faisceau 102A est réfléchi sur la face latérale 715, entre la face latérale 713 recevant la zone d'injection et la face latérale 714 située du côté opposé à la face latérale 713.

L'autre sous-faisceau 102B est réfléchi deux fois sur une face latérale du guide d'onde planaire 710, avant d'atteindre la deuxième facette de sortie 732. Ici, le sous-faisceau 102B est réfléchi sur la face latérale 716, du côté opposé à la face latérale 715, et sur la face latérale 714.

Dans ce mode de réalisation, la zone d'injection 720 est décentrée relativement au centre de la face latérale 713 du guide d'onde planaire. Le faisceau lumineux initial se propage de préférence dans un plan (Oyz) passant par le centre de la zone d'injection 720.

La figure 7B illustre un composant optique 700' selon une variante du mode de réalisation de la figure 7A.

Cette variante ne diffère du mode de réalisation de la figure 7A qu'en ce que la zone d'extraction 730' est translatée dans un plan (Oxy), de manière que :
- le sous-faisceau 102B se propage directement depuis la zone d'injection 720' jusqu'à l'une facette de sortie de la zone d'extraction 730', sans réflexion intermédiaire sur une face latérale du guide d'onde planaire ; et
- le sous-faisceau 702A se propage depuis la zone d'injection 720' jusqu'à l'autre facette de sortie, en étant réfléchi sur trois faces latérales respectives du guide d'onde planaire.

Dans les variantes des figures 7A et 7B, les sous-faisceaux 102A et 102B émergent de la zone d'extraction en se propageant dans des sens opposés, ce qui simplifie les figures d'interférence. En revanche, le bras objet et le bras de référence définis dans le composant optique n'ont pas la même longueur optique. Cela se traduit par un grandissement différent sur le sous-faisceau 102A et le sous-faisceau 102B, lors de leur propagation depuis la zone d'injection jusqu'à la zone d'extraction. Cette différence de grandissement peut être compensée, à l'injection, en jouant sur les surfaces de recouvrement entre le faisceau lumineux initial 101 et la première, respectivement la deuxième facette d'entrée.

La figure 8 illustre de façon schématique un premier exemple d'un système 1000 selon l'invention, représenté selon une vue de côté en transparence, dans un plan (Oyz). Le système 1000 comporte un composant optique 100' selon l'invention, et un module de détection 800.

Ici, mais de manière non limitative, le composant optique est du type de celui représenté à la figure 3.

Le module de détection 800 comporte un détecteur matriciel, qui est configuré pour acquérir une figure d'interférence formée par une partie au moins de la lumière émergeant du composant optique 100' par l'une première facette de sortie et par une partie au moins de la lumière émergeant du composant optique 100' par l'autre facette de sortie. Le détecteur matriciel est sensible à au moins une longueur d'onde destinée à être injectée en entrée du composant optique, ici sensible dans l'infrarouge.

Le détecteur matriciel est de préférence un détecteur infrarouge matriciel, par exemple une matrice de bolomètres, ou une matrice de photodiodes. En variante, le détecteur matriciel peut être sensible dans le visible, constitué par exemple d'une matrice de photodiodes. Le détecteur matriciel s'étend sur une surface de largeur comprise de préférence entre 1 mm et 30 mm. Il s'agit par exemple d'une matrice composée de 80x80 pixels répartis sur un carré de côté 2,72 mm. De préférence, les dimensions d'une surface de capture du détecteur matriciel sont sensiblement égales aux dimensions de la surface d'analyse et de la surface de référence dans le composant optique 100'.

Le détecteur matriciel s'étend parallèle au plan (Oxy), à proximité de la zone d'extraction 130' du composant optique. Le détecteur matriciel s'étend de préférence à une distance W d'un plan (Oxy) passant par les surfaces d'analyse et de référence, avec W compris entre 100 µm et 1,5 mm. Avantageusement, le détecteur matriciel s'étend dans le plan de la face avant 112 du guide d'onde planaire. Le composant optique selon l'invention peut alors servir d'entretoise entre l'échantillon à analyser (et l'échantillon de référence) et le détecteur matriciel. Il n'y a pas d'optique de formation d'image entre le détecteur matriciel et les surfaces recevant les échantillons, en utilisation.

Il est possible qu'en pratique, on obtienne une figure d'interférence avec des franges trop petites pour être résolues avec le dispositif matriciel. Néanmoins, on pourra observer des franges quand même, grâce au phénomène de tramage ou de moiré qui apparaît en cas de sous-échantillonnage.

La figure 9 illustre de façon schématique un deuxième exemple d'un système 2000 selon l'invention, représenté selon une vue de côté en transparence, dans un plan (Oyz).

Le système 2000 ne diffère du système de la figure 8, qu'en ce qu'il comporte en outre un module d'émission lumineuse 900, configuré pour émettre au moins un faisceau lumineux initial 101 injecté dans le composant optique 100' au niveau de la zone d'injection. Le module d'émission lumineuse 900 est configuré pour émettre de la lumière à au moins une longueur d'onde destinée à être injectée en entrée du composant optique, ici dans l'infrarouge. Le module 900 comporte une ou plusieurs sources lumineuses, de préférence monochromatique(s). Il peut comporter une pluralité de sources monochromatiques, par exemple plusieurs lasers à cascade quantiques. Lorsque le module 900 comporte plusieurs sources monochromatiques et/ou au moins une source polychromatique (assortie d'un système de filtres), le composant optique selon l'invention permet de réaliser de l'imagerie interférométrique multi-spectrale, pour une caractérisation plus complète de l'échantillon à analyser.

On peut injecter dans le guide d'onde planaire plusieurs longueurs d'onde discrètes, simultanément ou successivement. Il n'y a pas de limitations sur le nombre de longueurs d'onde discrètes pouvant être injectées. En revanche, la largeur spectrale d'un signal lumineux injecté dans le guide d'onde planaire doit rester inférieure à un seuil prédéterminé, pour conserver un contraste suffisant des franges. Le matériau du guide d'onde planaire est de préférence peu dispersif aux longueurs d'onde injectées. Le guide d'onde planaire est avantageusement en silicium, matériau peu dispersif dans l'infrarouge. D'autres matériaux sont également possible, par exemple le germanium cristallin, le sulfure de zinc cristallin, le chlorure de baryum cristallin, le fluorure de baryum cristallin, pour des applications dans l'infrarouge lointain, à des longueurs d'onde pouvant aller au-delà de 10 µm. D'autres matériaux sont également possibles, par exemple le diamant, un verre (SiO₂, BF33, quartz, etc) ou un polymère optique, pour des applications dans le visible.

Sur la figure 9, on a représenté un faisceau lumineux initial 101 orienté en biais relativement aux axes (Oz) et (Oy). En variante, le faisceau lumineux initial 101 peut être orienté parallèle à l'axe (Oz).

L'invention couvre également un système optique, non représenté, qui comporte :
- un composant optique selon l'invention ; et
- un calculateur, relié au détecteur matriciel, configuré pour recevoir en entrée des mesures d'intensité lumineuse fournies par le détecteur, et pour fournir en sortie une image de l'échantillon à analyser.

Les mesures d'intensité lumineuse forment ensemble une figure d'interférence. La figure d'interférence présente des décalages de franges, liés aux déphasages apportés par l'échantillon à analyser, une perte de contraste des franges, liée à l'absorption par l'échantillon à analyser, et généralement un effet de moiré lié à un sous échantillonnage par le détecteur matriciel.

L'image de l'échantillon à analyser peut être une carte de répartition de valeurs de déphasages apportés par l'échantillon à analyser. En complément ou en variante, ladite image peut être une carte de répartition de compositions chimiques ou biologiques locales, obtenue à partir la carte de répartition de valeurs de déphasages.

Dans une variante proche de l'invention, la zone d'injection ne s'étend pas au niveau d'une face latérale du guide d'onde planaire, mais elle est entièrement entourée par le matériau du guide d'onde planaire. La zone d'injection comporte alors de préférence quatre facettes, parmi lesquelles deux facettes adjacentes qui forment les facettes d'entrée. Le procédé d'utilisation reste le même, excepté qu'à l'injection, on s'assure de préférence que le faisceau lumineux initial ne s'étend que sur les deux facettes d'entrée.

Les facettes formées dans le guide d'onde planaire, au niveau de la zone d'injection et de la zone d'extraction, peuvent chacune être réalisées à l'aide de l'un au moins parmi les procédés suivants :
1/ Procédé de fabrication standard, dans lequel la zone d'injection et/ou la zone d'extraction sont/est réalisée(s) en gravant directement un substrat initial en silicium.
2/ Procédé de fabrication standard alternatif, dans lequel la zone d'injection et/ou la zone d'extraction sont/est réalisée(s) en gravant directement un substrat initial, où le substrat initial est constitué d'un matériau cristallin transparent aux longueurs d'onde souhaitées et distinct du silicium, par exemple du germanium cristallin, du sulfure de zinc cristallin, du chlorure de baryum cristallin, du fluorure de baryum cristallin, etc (transparents dans l'infrarouge), ou du diamant (transparent dans le visible).
3/ Procédé de fabrication par moulage et emboutissage, dans lequel on fabrique un modèle en silicium cristallin, par un procédé tel que mentionné au point 1/. Le modèle est ensuite répliqué dans un matériau annexe pas forcément cristallin. Le matériau annexe peut présenter de meilleures propriétés de transparence dans l'infrarouge que le silicium cristallin. Il peut s'agir de verres de chalcogénure. En variante, le matériau annexe peut être transparent plutôt dans le visible, ou dans toute autre gamme de longueurs d'onde. La réplication peut mettre en oeuvre un procédé de moulage et emboutissage.
4/ Procédé de fabrication alternatif par moulage et emboutissage, dans lequel on fabrique directement un moule en silicium cristallin, par un procédé tel que mentionné au point 1/. Le composant optique est réalisé par emboutissage à l'aide de ce moule, et constitué d'un matériau annexe tel que celui mentionné au point 3/ ci-dessus.

Le procédé mentionné au point 1/ peut mettre en oeuvre une gravure anisotrope sur des plans cristallins. La gravure anisotrope comprend un masquage des zones à préserver, et un bain dans une solution comportant un agent d'attaque anisotrope (par exemple de la potasse). L'agent d'attaque présente des directions d'attaque préférentielles, liées au réseau cristallin.

L'invention n'est pas limitée aux exemples décrits, et couvre de nombreuses autres variantes, notamment avec des matériaux différents, des formes et orientations différentes des facettes d'entrée et des facettes de sortie, des formes différentes du guide d'onde planaire et notamment des orientations différentes de ses faces latérales, différents trajets optiques des faisceaux objet et de référence dans le guide d'onde planaire, différentes formes du guide d'onde planaire, etc. Selon d'autres variantes, la surface d'analyse et la surface de référence ne correspondent pas à la dernière incidence, mais à une incidence intermédiaire du faisceau objet, respectivement du faisceau de référence, sur la face arrière du guide d'onde planaire. De préférence, dans tous les cas, les dimensions de la surface d'analyse et les dimensions de la surface de référence sont sensiblement égales aux dimensions d'une surface de capture du détecteur matriciel. Selon d'autres variantes encore, les surfaces d'analyse et de référence se trouvent sur la face avant du guide d'onde planaire, du même côté que la zone d'injection. Le procédé d'utilisation est le même, excepté que les échantillons sont déposés sur la face avant du guide d'onde planaire. Les exemples de systèmes décrits ci-dessus peuvent être mis en oeuvre avec n'importe quel exemple de composant optique selon l'invention. En outre, les différents systèmes décrits ci-dessus peuvent être combinés entre eux.

L'homme du métier saura aisément dimensionner le composant optique selon l'invention, pour s'assurer d'avoir les réflexions internes souhaitées dans le guide d'onde planaire, notamment des réflexions sur des faces latérales de ce dernier. Ce dimensionnement n'apporte pas de contrainte forte, car un angle critique de réflexion totale interne dans le guide d'onde planaire, défini relativement à la normale à l'interface considérée sur le guide d'onde planaire, prend généralement une faible valeur. Cette valeur est par exemple de 17°, pour une interface entre du silicium et de l'air.

De manière avantageuse, le guide d'onde planaire peut être appliqué contre une surface optiquement réfléchissante, accolée contre la face arrière du guide d'onde planaire. Ladite surface optiquement réfléchissante est alors munie d'une ouverture traversante, au niveau d'une surface d'analyse du guide d'onde planaire, destinée à être accolée contre un échantillon à analyser. Une région de ladite surface optiquement réfléchissante forme alors l'échantillon de référence.

L'invention permet de réaliser de l'imagerie interférométrique, par exemple dans l'infrarouge. Elle permet de réaliser des analyses chimiques ou biologiques d'un échantillon, et d'obtenir rapidement des images grand champ avec une instrumentation compacte. Elle trouve notamment à s'appliquer dans le domaine de la santé et de l'agro-alimentaire. L'invention peut également être utilisée dans un dispositif d'endoscopie. Dans ce cas, le composant optique selon l'invention peut être disposé à l'intérieur d'un logement étanche.

## Revendications

1. Composant optique (100; 100' ; 700 ; 700') pour un dispositif interférométrique d'imagerie par réflexion totale atténuée, **caractérisé en ce qu'**il comporte :
- un guide d'onde planaire (110 ; 110' ; 710), délimité notamment par une face avant (112), une face arrière (111), et des faces latérales, avec la face avant et la face arrière parallèles entre elles et formant les deux faces de plus grande étendue du guide d'onde planaire ;
- une zone d'injection (120 ; 120' ; 720; 720'), comportant deux facettes d'entrée (121, 122 ; 121', 122') formées dans le guide d'onde planaire, lesdites facettes d'entrée étant inclinées en biais relativement au plan des faces avant et arrière du guide d'onde planaire, lesdites facettes d'entrée s'étendant chacune depuis une première face latérale (113 ; 113' ; 713) du guide d'onde planaire, et lesdites facettes d'entrée étant configurées pour séparer un faisceau lumineux initial (101) en deux sous-faisceaux (102A, 102B) déviés chacun dans une direction respective à leur entrée dans le guide d'onde planaire ; et
- une zone d'extraction (130 ; 130' ; 730 ; 730'), comportant deux facettes de sortie (131, 132 ; 131', 132' ; 731, 732) formées dans le guide d'onde planaire, lesdites facettes de sortie étant inclinées en biais relativement au plan des faces avant et arrière du guide d'onde planaire, et lesdites facettes de sortie étant configurées pour recevoir les deux sous-faisceaux (102A, 102B) et pour dévier ces derniers à leur sortie hors du guide d'onde planaire ;
le composant optique (100; 100' ; 700; 700') étant configuré pour que les deux sous-faisceaux (102A, 102B) puissent interférer entre eux après avoir émergé hors du guide d'onde planaire.

2. Composant optique (100; 100' ; 700; 700') selon la revendication 1, dans lequel les deux facettes d'entrée (121, 122 ; 121', 122') forment deux faces latérales adjacentes d'une première pyramide (123').

3. Composant optique (100; 100' ; 700; 700') selon la revendication 2, dans lequel ladite première pyramide (123') est une pyramide droite à base carrée.

4. Composant optique (100; 100') selon l'une quelconque des revendications 1 à 3, dans lequel les deux facettes de sortie (131, 132 ; 131', 132') s'étendent chacune depuis une seconde face latérale (114; 114') du guide d'onde planaire, avec les première et seconde faces latérales (113, 114 ; 113', 114') du guide d'onde planaire situées au regard l'une de l'autre.

5. Composant optique (100; 100') selon la revendication 4, dans lequel les deux facettes de sortie (131, 132 ; 131', 132') forment deux faces latérales adjacentes d'une seconde pyramide (133') entière ou tronquée.

6. Composant optique (100; 100') selon la revendication 5, dans lequel ladite seconde pyramide (133') est une pyramide droite à base carrée.

7. Composant optique (100; 100') selon l'une quelconque des revendications 4 à 6, présentant une symétrie planaire, relativement à un plan de symétrie (P; P') orthogonal au plan des faces avant et arrière du guide d'onde planaire, et passant par le centre de la zone d'injection et par le centre de la zone d'extraction.

8. Composant optique (100') selon l'une quelconque des revendications 4 à 7, dans lequel le guide d'onde planaire comporte une troisième face latérale (115') et une quatrième face latérale (116'), situées au regard l'une de l'autre et s'étendant chacune entre la première face latérale (113') recevant la zone d'injection et la seconde face latérale (114') recevant la zone d'extraction, et inclinées entre elles de sorte qu'une distance entre la troisième face latérale et la quatrième face latérale diminue au fur et à mesure que l'on s'éloigne de la zone d'injection (120') et que l'on se rapproche de la zone d'extraction (130').

9. Composant optique (700; 700') selon l'une quelconque des revendications 1 à 3, dans lequel la zone d'extraction (730 ; 730') est entièrement entourée par le matériau du guide d'onde planaire.

10. Composant optique (700; 700') selon la revendication 9, dans lequel la zone d'extraction (730 ; 730') comporte au moins quatre facettes, parmi lesquelles les deux facettes de sortie (731, 732) qui sont situées au regard l'une de l'autre.

11. Composant optique (700; 700') selon la revendication 10, dans lequel les au moins quatre facettes sont toutes inclinées d'un même angle relativement au plan des faces avant et arrière du guide d'onde planaire (710).

12. Composant optique (100; 100' ; 700; 700') selon l'une quelconque des revendications 1 à 11, dans lequel :
- la zone d'injection (120 ; 120' ; 720 ; 720') est configurée pour réaliser l'injection, dans le guide d'onde planaire, de rayons lumineux provenant d'un demi-espace avant ; et
- la zone d'extraction (130 ; 130' ; 730; 730') est configurée pour réaliser l'extraction de rayons lumineux, hors du guide d'onde planaire, et vers ledit demi-espace avant ;
où le demi-espace avant est délimité par un plan passant par la face avant (112) du guide d'onde planaire, et s'étend du côté opposé au guide d'onde planaire.

13. Système d'imagerie (1000 ; 2000), **caractérisé en ce qu'**il comporte :
- un composant optique (100) selon l'une quelconque des revendications 1 à 12 ; et
- un détecteur matriciel (800), configuré pour acquérir une figure d'interférence formée par une partie au moins de la lumière émergeant du composant optique par l'une des facettes de sortie et une partie au moins de la lumière émergeant du composant optique par l'autre des facettes de sortie.

14. Système selon la revendication 13, comportant en outre un module de traitement configuré pour :
- recevoir en entrée au moins une image acquise par le détecteur matriciel ;
- effectuer un traitement de ladite image de manière à en déduire des valeurs locales de déphasage ; et
- fournir en sortie une image d'un échantillon à analyser, formée à partir desdites valeurs locales de déphasage.

15. Procédé d'utilisation d'un composant optique (100; 100' ; 700 ; 700') selon l'une quelconque des revendications 1 à 12, **caractérisé en ce qu'**il comporte les étapes suivantes :
- disposition d'une surface d'intérêt d'un échantillon à analyser, contre une surface d'analyse (141A ; 141A') formée par une première région de la face arrière du guide d'onde planaire, et disposition d'une surface d'intérêt d'un échantillon de référence, contre une surface de référence (141B ; 141B') formée par une seconde région de la face arrière du guide d'onde planaire ;
- injection de lumière dans le guide d'onde planaire (110 ; 110' ; 710), au niveau de la zone d'injection (120 ; 120' ; 720 ; 720'), de manière à ce qu'une partie (102A) de la lumière injectée se propage dans le guide d'onde planaire, depuis la zone d'injection jusqu'à l'une des facettes de sortie (131; 731) de la zone d'extraction, en passant par la surface d'analyse (141A; 141A'), et de manière à ce qu'une autre partie (102B) de la lumière injectée se propage dans le guide d'onde planaire, depuis la zone d'injection jusqu'à l'autre des facettes de sortie (132 ; 732) de la zone d'extraction, en passant par la surface de référence (141B ; 141B') ; et
- détection d'une figure d'interférence formée par la lumière émergeant du guide d'onde planaire respectivement par la première facette de sortie (131; 731) et par la seconde facette de sortie (132 ; 732).

## Patentansprüche

1. Optische Komponente (100; 100'; 700; 700') für eine interferometrische Bildgebungsvorrichtung durch abgeschwächte Totalreflexion, **dadurch gekennzeichnet, dass** sie Folgendes umfasst:
- einen planaren Wellenleiter (110; 110'; 710), der insbesondere von einer Vorderseite (112), einer Rückseite (111) und Seitenflächen begrenzt wird, wobei die Vorderseite und die Rückseite parallel zueinanderstehen und die beiden Flächen mit der größten Ausdehnung des planaren Wellenleiters bilden;
- einen Injektionsbereich (120; 120'; 720; 720'), der zwei Eingangsfacetten (121, 122; 121', 122') umfasst, die in dem planaren Wellenleiter ausgebildet sind, wobei die Eingangsfacetten in Bezug auf die Ebene der Vorder- und Rückseiten des planaren Wellenleiters schräg geneigt sind, wobei sich die Eingangsfacetten jeweils von einer ersten Seitenfläche (113 ; 113'; 713) des planaren Wellenleiters erstreckt, und die Eintrittsfacetten so konfiguriert sind, dass sie einen anfänglichen Lichtstrahl (101) in zwei Teilstrahlen (102A, 102B) aufteilen, die bei ihrem Eingang in den planaren Wellenleiter jeweils in eine entsprechende Richtung abgelenkt werden; und
- einen Extraktionsbereich (130; 130'; 730; 730') mit zwei Ausgangsfacetten (131, 132; 131', 132'; 731, 732) umfasst, die in dem planaren Wellenleiter ausgebildet sind, wobei die Ausgangsfacetten in Bezug auf die Ebene der Vorder- und Rückseiten des planaren Wellenleiters schräg geneigt sind und die Ausgangsfacetten so konfiguriert sind, dass sie die beiden Teilstrahlen (102A, 102B) aufnehmen und diese bei ihrem Ausgang aus dem planaren Wellenleiter umlenken;
wobei die optische Komponente (100; 100'; 700; 700') so konfiguriert ist, dass die beiden Teilstrahlen (102A, 102B) miteinander interferieren können, nachdem sie aus dem planaren Wellenleiter herausgetreten sind.

2. Optische Komponente (100; 100'; 700; 700') nach Anspruch 1, wobei die beiden Eingangsfacetten (121, 122; 121', 122') zwei benachbarte Seitenflächen einer ersten Pyramide (123') bilden.

3. Optische Komponente (100; 100'; 700; 700') nach Anspruch 2, wobei die erste Pyramide (123') eine gerade Pyramide mit quadratischer Grundfläche ist.

4. Optische Komponente (100; 100') nach einem der Ansprüche 1 bis 3, wobei sich die beiden Ausgangsfacetten (131, 132; 131', 132') jeweils von einer zweiten Seitenfläche (114; 114') des planaren Wellenleiters aus erstrecken, wobei die erste und die zweite Seitenfläche (113, 114; 113', 114') des planaren Wellenleiters einander zugewandt sind.

5. Optische Komponente (100; 100') nach Anspruch 4, wobei die beiden Ausgangsfacetten (131, 132; 131', 132') zwei benachbarte Seitenflächen einer zweiten ganzen oder abgestumpften Pyramide (133') bilden.

6. Optische Komponente (100; 100') nach Anspruch 5, wobei die zweite Pyramide (133') eine gerade Pyramide mit quadratischer Grundfläche ist.

7. Optische Komponente (100; 100') nach einem der Ansprüche 4 bis 6, die eine planare Symmetrie in Bezug auf eine Symmetrieebene (P; P') aufweist, die orthogonal zur Ebene der Vorder- und Rückseite des planaren Wellenleiters verläuft und durch das Zentrum des Injektionsbereichs und das Zentrum des Extraktionsbereichs verläuft.

8. Optische Komponente (100') nach einem der Ansprüche 4 bis 7, bei der der planare Wellenleiter eine dritte Seitenfläche (115') und eine vierte Seitenfläche (116') umfasst, die einander gegenüberliegen und sich jeweils zwischen der ersten Seitenfläche (113'), die den Injektionsbereich abdeckt, und der zweiten Seitenfläche (114'), die den Extraktionsbereich abdeckt, erstrecken, und zueinander geneigt sind, so dass ein Abstand zwischen der dritten Seitenfläche und der vierten Seitenfläche abnimmt, je weiter man sich von dem Injektionsbereich (120') entfernt und je weiter man sich dem Extraktionsbereich (130') nähert.

9. Optische Komponente (700; 700') nach einem der Ansprüche 1 bis 3, wobei der Extraktionsbereich (730; 730') vollständig von dem Material des planaren Wellenleiters umgeben ist.

10. Optische Komponente (700; 700') nach Anspruch 9, bei der der Extraktionsbereich (730; 730') mindestens vier Facetten umfasst, darunter die beiden Ausgangsfacetten (731, 732), die einander gegenüberliegen.

11. Optische Komponente (700; 700') nach Anspruch 10, wobei die mindestens vier Facetten alle um denselben Winkel relativ zur Ebene der Vorder- und Rückseiten des planaren Wellenleiters (710) geneigt sind.

12. Optische Komponente (100; 100'; 700; 700') nach einem der Ansprüche 1 bis 11, wobei:
- der Injektionsbereich (120; 120'; 720; 720') konfiguriert ist, um Lichtstrahlen aus einem vorderen Halbraum in den planaren Wellenleiter zu injizieren; und
- der Extraktionsbereich (130; 130'; 730; 730') konfiguriert ist, um die Extraktion von Lichtstrahlen aus dem planaren Wellenleiter und in den vorderen Halbraum zu bewirken;
wobei der vordere Halbraum durch eine Ebene begrenzt ist, die durch die Vorderseite (112) des planaren Wellenleiters verläuft, und sich von der dem planaren Wellenleiter gegenüberliegenden Seite erstreckt.

13. Bildgebungssystem (1000; 2000), **dadurch gekennzeichnet, dass** es Folgendes umfasst:
- eine optische Komponente (100) nach einem der Ansprüche 1 bis 12; und
- einen Matrixdetektor (800), der so konfiguriert ist, dass er ein Interferenzmuster erfasst, das von mindestens einem Teil des Lichts, das aus der optischen Komponente durch eine der Ausgangsfacetten austritt, und mindestens einem Teil des Lichts, das aus der optischen Komponente durch die andere der Ausgangsfacetten austritt, gebildet wird.

14. System nach Anspruch 13, das ferner ein Verarbeitungsmodul umfasst, das für Folgendes konfiguriert ist:
- mindestens ein vom Matrixdetektor aufgenommenes Bild als Eingang zu empfangen;
- eine Verarbeitung des Bildes durchzuführen, um daraus lokale Werte der Phasenverschiebung abzuleiten; und
- ein Bild einer zu analysierenden Probe aus den lokalen Werten der Phasenverschiebung auszugeben.

15. Verfahren zur Verwendung einer optischen Komponente (100; 100'; 700; 700') nach einem der Ansprüche 1 bis 12, **dadurch gekennzeichnet, dass** es die folgenden Schritte umfasst:
- Anordnen einer Interessenfläche einer zu analysierenden Probe gegen eine Analysefläche (141A; 141A'), die durch eine erste Region der Rückseite des planaren Wellenleiters gebildet wird, und Anordnen einer Interessenfläche einer Referenzprobe gegen eine Referenzfläche (141B; 141B'), die durch eine zweite Region der Rückseite des planaren Wellenleiters gebildet wird;
- Injektion von Licht in den planaren Wellenleiter (110; 110'; 710) an dem Injektionsbereich (120; 120'; 720; 720'), so dass ein Teil (102A) des injizierten Lichts sich in dem planaren Wellenleiter von dem Injektionsbereich ausgehend zu einer der Ausgangsfacetten des Extraktionsbereichs (131; 731) ausbreitet, durch die Analysefläche (141A; 141A') und so, dass ein weiterer Teil (102B) des injizierten Lichts sich in dem planaren Wellenleiter von dem Injektionsbereich zu der anderen der Austrittsfacetten (132; 732) des Extraktionsbereichs durch die Referenzfläche (141B; 141B') ausbreitet; und
- Erfassen eines Interferenzmusters, das durch Licht gebildet wird, das aus dem planaren Wellenleiter durch die erste Ausgangsfacette (131; 731) bzw. durch die zweite Ausgangsfacette (132; 732) austritt.

## Claims

1. Optical component (100; 100'; 700; 700') for an attenuated total reflection interferometric imaging device, **characterised in that** it includes:
- a planar waveguide (110; 110'; 710), especially delimited by a front face (112), a rear face (111), and side faces, with the front face and the rear face being parallel to each other and forming the two largest faces of the planar waveguide;
- an injection zone (120; 120'; 720; 720'), including two input facets (121, 122; 121', 122') formed into the planar waveguide, said input facets being obliquely tilted relative to the plane of the front and rear faces of the planar waveguide, said input facets each extending from a first side face (113; 113'; 713) of the planar waveguide, and said input facets being configured to separate an initial light beam (101) into two sub-beams (102A, 102B) each deflected in a respective direction as they enter the planar waveguide; and
- an extraction zone (130; 130'; 730; 730'), comprising two outlet facets (131, 132; 131', 132'; 731, 732) formed into the planar waveguide, said outlet facets being obliquely tilted relative to the plane of the front and rear faces of the planar waveguide, and said outlet facets being configured to receive the two sub-beams (102A, 102B) and to deflect the latter as they exit the planar waveguide;
the optical component (100; 100'; 700; 700') being configured so that the two sub-beams (102A, 102B) can interfere with each other after emerging out of the planar waveguide.

2. Optical component (100; 100'; 700; 700') according to claim 1, wherein the two input facets (121, 122; 121', 122') form two adjacent side faces of a first pyramid (123').

3. Optical component (100; 100'; 700; 700') according to claim 2, wherein said first pyramid (123') is a square-base straight pyramid.

4. Optical component (100; 100') according to any of claims 1 to 3, wherein the two outlet facets (131, 132; 131', 132') each extend from a second side face (114; 114') of the planar waveguide, with the first and second side faces (113, 114; 113', 114') of the planar waveguide being located facing each other.

5. Optical component (100; 100') according to claim 4, wherein the two outlet facets (131, 132; 131', 132') form two adjacent side faces of a second, whole or truncated, pyramid (133').

6. Optical component (100; 100') according to claim 5, wherein said second pyramid (133') is a square-base straight pyramid.

7. Optical component (100; 100') according to any of claims 4 to 6, having a planar symmetry, relative to a plane of symmetry (P; P') orthogonal to the plane of the front and rear faces of the planar waveguide, and passing through the centre of the injection zone and through the centre of the extraction zone.

8. Optical component (100') according to any of claims 4 to 7, wherein the planar waveguide includes a third side face (115') and a fourth side face (116'), located facing each other and each extending between the first side face (113') receiving the injection zone and the second side face (114') receiving the extraction zone, and tilted with respect to each other so that a distance between the third side face and the fourth side face decreases further away from the injection zone (120') and closer to the extraction zone (130').

9. Optical component (700; 700') according to any of claims 1 to 3, wherein the extraction zone (730; 730') is fully surrounded by the material of the planar waveguide.

10. Optical component (700; 700') according to claim 9, wherein the extraction zone (730; 730') comprises at least four facets, among which the two outlet facets (731, 732) which are located facing each other.

11. Optical component (700; 700') according to claim 10, wherein the at least four facets are all tilted by a same angle relative to the plane of the front and rear faces of the planar waveguide (710).

12. Optical component (100; 100'; 700; 700') according to any of claims 1 to 11, wherein:
- the injection zone (120; 120'; 720; 720') is configured to carry out the injection, into the planar waveguide, of light rays coming from a front half-space; and
- the extraction zone (130; 130'; 730; 730') is configured to carry out the extraction of light rays, out of the planar waveguide, and towards said front half-space;
where the front half-space is delimited by a plane passing through the front face (112) of the planar waveguide, and extends on the side opposite to the planar waveguide.

13. Imaging system (1000; 2000), **characterised in that** it includes:
- an optical component (100) according to any of claims 1 to 12; and
- a array detector (800), configured to acquire an interference pattern formed by at least a part of the light emerging from the optical component through one of the outlet facets and at least a part of the light emerging from the optical component through the other of the outlet facets.

14. System according to claim 13, further including a processing module configured to:
- receive as an input at least one image acquired by the array detector;
- perform processing of said image so as to deduce therefrom phase shift local values; and
- output an image of a sample to be analysed, formed from said phase shift local values.

15. Method for using an optical component (100; 100'; 700; 700') according to any of claims 1 to 12, **characterised in that** it comprises the following steps:
- arranging a surface of interest of a sample to be analysed, against an analysis surface (141A; 141A') formed by a first region of the rear face of the planar waveguide, and arranging a surface of interest of a reference sample, against a reference surface (141B; 141B') formed by a second region of the rear face of the planar waveguide;
- injecting light into the planar waveguide (110; 110'; 710) at the injection zone (120; 120'; 720; 720'), so that a part (102A) of the injected light propagates into the planar waveguide, from the injection zone to one of the outlet facets (131; 731) of the extraction zone, passing through the analysis surface (141A; 141A'), and so that another part (102B) of the injected light propagates into the planar waveguide, from the injection zone to the other of the outlet facets (132; 732) of the extraction zone, passing through the reference surface (141B; 141B'); and
- detecting an interference pattern formed by the light emerging from the planar waveguide respectively through the first outlet facet (131; 731) and through the second outlet facet (132; 732).
